(19) Europäisches Patentamt
European Patent Office
Office européen des brevets

(11) Veröffentlichungsnummer: **0 175 288 B1**

(12) # EUROPÄISCHE PATENTSCHRIFT

(45) Veröffentlichungstag der Patentschrift: **15.05.91**

(51) Int. Cl.$^5$: **C25B 15/00**, C25B 9/00

(21) Anmeldenummer: **85111555.0**

(22) Anmeldetag: **12.09.85**

(54) **Verfahren zum galvanischen Trennen der elektrolytführenden Sammelleitungen von den Elektrolyträumen eines elektro-chemischen Zellenpaketes.**

(30) Priorität: **19.09.84 DE 3434328**

(43) Veröffentlichungstag der Anmeldung:
**26.03.86 Patentblatt 86/13**

(45) Bekanntmachung des Hinweises auf die Patenterteilung:
**15.05.91 Patentblatt 91/20**

(84) Benannte Vertragsstaaten:
**AT BE CH DE FR GB IT LI NL SE**

(56) Entgegenhaltungen:
**GB-A- 1 367 673**
**GB-A- 2 161 316**
**RO-A- 82 540**
**US-A- 2 183 299**
**US-A- 2 673 232**

**DERWENT JAPANESE PATENTS REPORT, Band T, Nr. 30 (Pt. II), 29. August 1972, Seite 2, Zusammenfassung Nr. 48747T, Derwent Publications Ltd, London, GB; & JP-A-72 27 690 (JAPAN STORAGE BATTERY CO.) 24-07-1972**

(73) Patentinhaber: **HOECHST AKTIENGESELLSCHAFT**
**Postfach 80 03 20**
**W-6230 Frankfurt am Main 80(DE)**

(72) Erfinder: **Tetzlaff, Karl-Heinz**
**Mörikestrasse 6**
**W-6233 Kelkheim (Taunus)(DE)**
Erfinder: **Schmid, Dieter, Dr.**
**Ostring 132**
**W-6231 Schwalbach(DE)**
Erfinder: **Russow, Jürgen, Dr.**
**Am Schieferberg 45**
**W-6233 Kelkheim (Taunus)(DE)**

**EP 0 175 288 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zum galvanischen Trennen der elektrolytführenden Sammelleitungen und den Elektrolyträumen eines elektrochemischen Zellenpaketes mittels Tropfenstrecken.

Das Verfahren eignet sich für alle elektrochemischen Prozesse, in denen ein Elektrolyt in flüssiger Form zugeführt oder abgeführt werden muß. Anwendungsgebiete sind die Elektrolyse, die Elektrodialyse und der Betrieb von Brennstoffzellen und Batterien. Das Verfahren ist auf geteilte und ungeteilte Zellen anwendbar. Die Zellen können bipolar oder monopolar geschaltet sein. Es ist sowohl anwendbar auf Zellenkonstruktionen mit gefluteten Elektrolyträumen sowie auf sogenannte Fallfilmzellen, bei denen der Elektrolyt unter Ausnutzung der Schwerkraft in dünner Schicht an den Elektroden fließt.

Werden elektrochemische Zellen, die auf unterschiedlichen Spannungsniveaus arbeiten, an einer elektrolytführenden Sammelleitung angeschlossen, so entstehen elektrische Verlustströme, die die Wirtschaftlichkeit herabsetzen und Korrosionsschäden an Zellen und peripheren Anlagenteilen verursachen. Um die Verlustströme bei bipolar geschalteten Zellen möglichst klein zu halten, schließt man die Einzelzellen über lange dünne Kunststoffleitungen an die Sammelleitung an. Diese Maßnahmen können für große industrielle Anlagen mit mehreren hundert Volt Spannung für ein bipolares Zellenpaket nicht voll befriedigen. Die langen dünnen Anschlußleitungen verhindern außerdem die Einstellung eines konstanten Druckes in den Zellen und führen insbesondere bei Zweiphasenströmungen zu Druckschwingungen.

Nach der US-PS 40 32 424 ist eine Vorrichtung zum Unterbrechen des elektrischen Stromflusses durch einen Mischstrom aus Gas und Flüssigkeit bekannt, die insbesondere in den Auslaßleitungen von Membranzellen eingebaut werden. Die Vorrichtung besteht im wesentlichen aus einer Einrichtung, mit deren Hilfe der Flüssigkeitsstrom in eine Tropfenstrecke umgewandelt werden kann. Nachteilig ist der zusätzliche Aufwand für eine weitere Vorrichtung in den Zu- und Ableitungen der Membranelektrolysezellen.

Die Aufgabe zur Erfindung besteht nun darin, die elektrischen Verlustströme beim Zu- und Ablauf der Elektrolyte durch ein einfaches Verfahren bzw. durch eine einfache, platzsparende Anordnung zu beseitigen.

Die Aufgabe wird durch ein Verfahren nach dem Anspruch gelöst.

Der elektrochemische Apparat zum Durchführen des erfindungsgemäßen Verfahrens weist Einrichtungen zum Erzeugen von Tropfen auf, die über dem Zellenpaket und am Ausgang der Elektrolyträume angeordnet sind. Einrichtungen zur Erzeugung von Tropfen sind im chemischen Apparatebau an sich bekannt. Die Elektrolyträume können mit Überlaufeinrichtung versehen sein. Überlaufeinrichtungen sind bei gefluteten Elektrolyträumen erforderlich. Bei Elektrolyträumen, die nur ein bestimmtes Schluckvermögen für den Elektrolyten besitzen, können Überlaufeinrichtungen die überschüssig zugeführte Menge über eine Tropfenstrecke abführen und damit das Verfahren erleichtern.

Der Elektrolyt wird also der Zelle über eine Tropfenstrecke zugeführt und verläßt die Zelle ebenfalls über eine Tropfenstrecke. Die Tropfenstrecken können innerhalb oder außerhalb des Zellenpaketes eingerichtet sein. Die räumliche Anordnung der Elektroden ist beliebig, vorzugsweise jedoch vertikal.

Die vorgeschlagene Erfindung ermöglicht eine vollständige galvanische Trennung der Elektrolyträume von den zu- und abführenden Sammelleitungen und vermeidet in einfacher Weise Energieverluste und Korrosion. Die Erfindung kann auch bei sehr dünnen Zellen, wie beispielsweise Fallfilmzellen angewendet werden. Durch die Realisierung der Tropfenstrecken innerhalb eines Druckbehälters ergeben sich darüber hinaus weitere wirtschaftliche Vorteile.

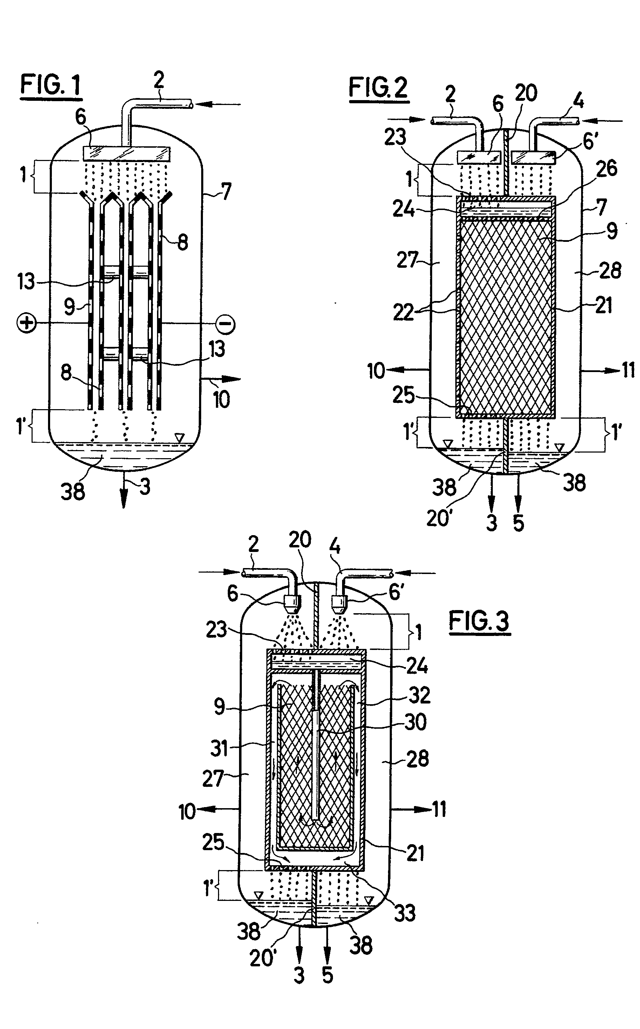

Die Erfindung wird anhand der Figuren 1 bis 7 beispielsweise beschrieben. Es werden nur bipolare Anordnungen gezeigt. Die Einrichtungen zum Verspannen und zum Abstützen der Zellenpakete sind nicht dargestellt. Behälter, in denen die Zellenpakete angeordnet sind, sind nur schematisch dargestellt. Figur 3 stellt eine Anordnung mit geflutetem Innenraum dar, alle anderen Darstellungen zeigen sogenannte Fallfilmzellen.

Es zeigen im einzelnen:

Figur 1 ein ungeteiltes Zellenpaket mit durchbrochenen Elektroden in einem Behälter;

Figur 2 ein Zellenpaket in einem Behälter mit geteilten Elektrolyträumen mit Blick in den Anodenraum einer Membran-Elektrolysezelle;

Figur 3 ein Zellenpaket wie Figur 2, jedoch mit geflutetem Innenraum;

Figur 4 einen Längsschnitt eines Zellenpaketes mit innenliegenden Tropfenstrecken mit Blick auf die Anode;

Figur 5 den Schnitt V-V von Figur 4;

Figur 6 ein Zellenpaket mit mehrfach unterteilten Elektrolyträumen für verschiedene Elektrolytsorten;

Figur 7 den Schnitt VII-VII von Figur 6.

Figur 1 zeigt eine ungeteilte Elektrolysezelle mit durchbrochenen Elektroden 8, 9, die für die Chloratproduktion geeignet ist. Das Zellenpaket in bipolarer Schaltung ist in einem Behälter 7 angeordnet. Die Sole aus der Sammelleitung 2 wird durch Einrichtungen 6 in Tropfen zerlegt, so daß zwischen diesen Einrichtungen 6 und dem Zellenpaket eine Tropfenstrecke 1 ausgebildet wird. Durch einen dachartigen Aufbau wird dafür gesorgt, daß der Elektrolyt auf die Elektroden 8 und 9 gelangt. Der Elektrolyt fließt unter Benetzung beider Elektroden nach unten. Das aus dem dünnen Elektrolytfilm auf der Rückseite der Elektroden austretende Gas kann nach unten aber auch seitlich entweichen. Es wird aus dem Behälter 7 mittels Leitung 10 abgezogen. Der Elektrolyt bildet beim Abtropfen von den Elektroden eine Tropfenstrecke 1' aus und verläßt den Behälter 7 ggf. zusammen mit dem entstandenen Gas über Sammelleitung 3. Die Elektroden werden durch hier nicht dargestellte Abstandshalter fixiert. Die gezeigte Anordnung läßt sich auch für Prozesse einsetzen, bei denen kein Gas gebildet wird. Anordnungen nach dem sogenannten Fallfilmprinzip sind außerordentlich kompakt und lassen sich daher leicht in Behälter 7 integrieren.

Bei der Anordnung nach Figur 2 werden zwei durch die Wände 20, 20' voneinander getrennte Gasräume 27 und 28 geschaffen. Dadurch lassen sich besonders einfache Brennstoffzellen und Elektrolysezellen herstellen. Das gilt auch für Elektrolysezellen mit Gasdiffusionselektroden, wie beispielsweise einer Sauerstoffverzehrkathode bei der Alkalichlorid-Elektrolyse. Für letztere wird der Anolyt - die Sole - durch die Sammelleitung 2 der Einrichtung 6 zur Erzeugung von Tropfen zugeführt. Von dort gelangt die Sole in Form von Tropfen auf die linke Zellenhälfte. Die Sole wird durch Bohrungen 23 in eine Verteilerrinne geleitet, die aus einer durchbrochenen Leiste 26 mit einem darüber befindlichen Raum 24 zum Verteilen der Sole über die Zellenbreite besteht. Die Sole fließt durch eine Vielzahl von Öffnungen der Leiste 26 auf die Anode 9. Dort fließt sie unter Benetzung von Membran und Anode 9 als Fallfilm herab. Durch die Bohrungen 25 gelangt die Sole, eine Tropfenstrecke 1' bildend, in den Behälter 7 und kann durch die Sammelleitung 3 abgezogen werden. Das entstehende Chlorgas gelangt über die Durchbrüche 22 im Anodenrahmen 21 in den Gasraum 27 und wird über die Leitung 10 abgeführt. Der Katholyt, der über die Sammelleitung 4 und Einrichtung 6' das Zellenpaket erreicht, fließt analog zum Anolyten unter Benetzung von Membran und Kathode in den Behälter 7 zurück und wird über die Leitung 5 abgeführt. Der Wasserstoff wird über die Leitung 11 aus dem Gasraum 28 entnommen. Der Kathodenraum ist ähnlich wie der zuvor beschriebene Anodenraum gestaltet. Die dort beschriebenen Öffnungen 23 und 25 sind jedoch spiegelbildlich angebracht.

Figur 3 zeigt eine Modifizierung der Anordnung gemäß Figur 2 für Zellen mit gefluteten Elektrolyträumen. Die Anordnung wird ebenfalls am Beispiel der Alkalichloridelektrolyse erläutert. Der Anolyt aus der Sammelleitung 2 gelangt über Einrichtungen 6 - z.B. Düsen, die Tropfenstrecke 1 und die Öffnungen 23 in den Raum 24. Von dort fließt er in einem Rohr 30 nach unten. Der gashaltige Anolyt steigt auf und fließt über die Räume 31 und 32 nach unten in den Raum 33. Anolyt und Gas treten durch die Bohrungen 25 in den Gasraum 27 ein. Bei kleinen Durchsätzen können die Räume 31, 32 und 33 entfallen, Gas und Elektrolyt können dann durch Öffnungen im Rahmen 21 und geeigneten Einrichtungen zur Erzeugung von Tropfen direkt in den Raum 27 gelangen (nicht dargestellt). Der Anolyt wird über die Sammelleitung 3, das Gas über die Leitung 10 abgezogen. Die Wände 20, 20' trennen die beiden Räume 27 und 28 voneinander. Der Kathodenraum ist ähnlich wie der zuvor beschriebene Anodenraum gestaltet. Die dort beschriebenen Öffnungen 23 und 25 sind jedoch spiegelbildlich angebracht.

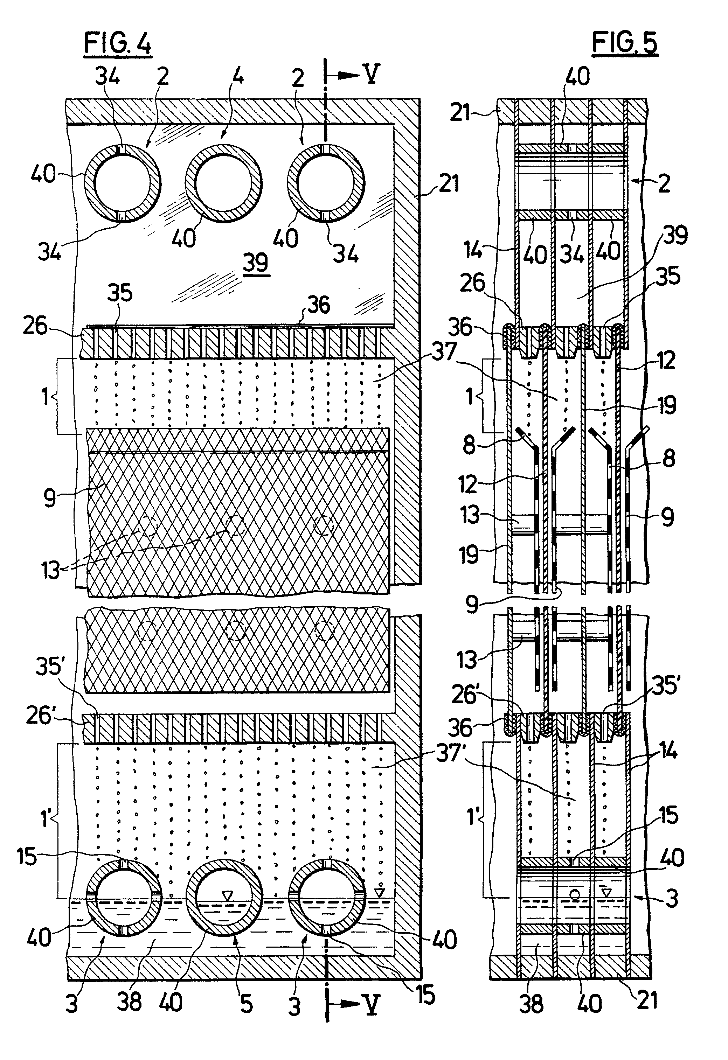

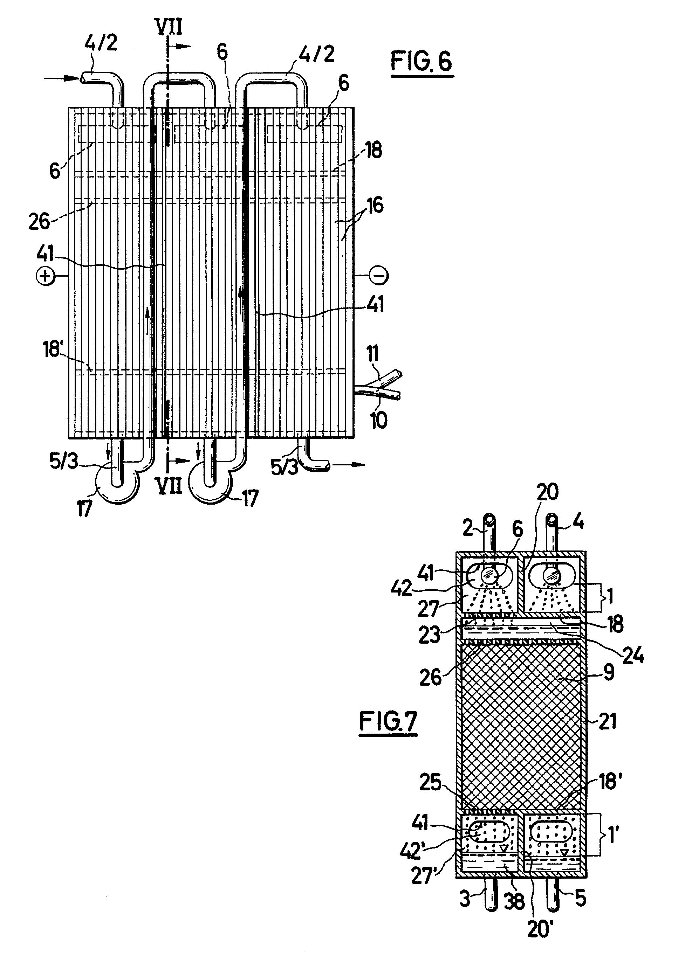

Bei dem Zellenpaket, gemäß Figuren 4 und 5 sind die isolierenden Tropfenstrecken 1, 1' innerhalb des Zellenpaketes angeordnet. Die Sammelleitungen 2, 3, 4 und 5 innerhalb dieses Zellenpaketes sind aus ringförmigen Teilen 40 ähnlich wie beim Plattenwärmeaustauscher aufgebaut. Der Anolyt hat nur Verbindung zum Anodenraum. Dieser ist gegenüber dem Kathodenraum isolierend abgedichtet. Nach außen ist der Anodenraum durch den umlaufenden Rahmen 21 abgedichtet. Es können mehrere Sammelleitungen 2 für die Zuführung des Anolyten innerhalb des Zellenpaketes angeordnet werden. Der Anolyt fließt durch Öffnungen 34 in den Raum 39 und staut sich an der Leiste 26. Der Raum 39 kann als Bestandteil der Sammelleitung 2 gelten und vollständig geflutet sein. Die Zwischenwände 14 und Dichtungen 36 sind aus einem isolierenden Material. Die Öffnungen 35 und die Unterseite der Leiste 26 sind so gestaltet, daß der Anolyt eine Tropfenstrecke 1 ausbildet.

Die Leiste 26 hat also die Aufgabe, den Elektrolyten gleichmäßig über die Elektrodenbreite zu verteilen und gleichzeitig als Einrichtung zum Erzeugen von Tropfen zu wirken. Die Tropfen fallen im Gasraum 37, der von der Membran 12 und der bipolaren Trennwand 19 begrenzt wird, auf die Elektroden 8,9. Der Elektrolyt fließt dann unter Benetzung von Membran 12 und Elektroden 8,9 nach unten, wo er auf eine Leiste 26' trifft. Diese Leiste 26' hat eine ähnliche Funktion wie die obere Leiste 26. Die untere Leiste 26' hat bei gasentwickeluden Elektroden jedoch größere Öffnungen 35', damit Gas und Elektrolyt gemeinsam hindurchfließen können. Der Elektrolyt bildet im Gasraum 37' wiederum eine Tropfenstrecke 1' aus. Der Gasraum kann als Bestandteil der Sammelleitung 3 gelten. Gas und Elektrolyt gelangen durch Öffnungen 15 in die Sammelleitung 3, in der sie gemeinsam abgezogen werden. Der untere Teil des Raumes 37' ist mit Elektrolyt 38 gefüllt. Die Sammelleitungen 4 und 5 für den Katholyten sind gegenüber den Anolyträumen isolierend abgedichtet. Der Katholyt wird in gleicher Weise wie der Anolyt durch das Zellenpaket geführt. Die durchbrochenen Elektroden 9 und 8 sind an Stromzuführungen 13 in bipolarer Schaltung angeschlossen.

Figuren 6 und 7 zeigen ein Zellenpaket mit mehrfach unterteilten Räumen für unterschiedliche Elektrolytsorten. Figur 6 ist eine Ansicht, die aus einer Vielzahl elektrochemischer Einzelzellen 16 besteht. Figur 7 ist der Schnitt VII-VII von Figur 6 durch den Anodenraum 21 mit Sicht auf die Anode 9. Anolyt und Katholyt können innerhalb eines Zellenpaketes 16 im Gleich- oder Gegenstrom kaskadenartig geführt werden. Der Anolyt tritt über die Sammelleitung 2 in das Zellenpaket ein und wird durch die Einrichtung 6, die als Rohrstück mit Löchern ausgebildet ist, auf die Leisten 18 des ersten Drittels des Zellenpaketes gesprüht. Dadurch entsteht eine Tropfenstrecke 1 im Gasraum 27. Der Anolyt gelangt dann über Öffnungen 23 in der Leiste 18 in die Verteilerrinnen, die durch den Raum 24 und die mit Bohrungen ausgestattete Leiste 26 gebildet wird. Von dort fließt der Anolyt unter Benetzung der Anode 9 und der Membran herab und wird durch Öffnungen 25 in der unteren Leiste 18' zusammen mit eventuell gebildetem Gas in Tropfenform in den Gasraum 27' ausgetragen. Zur Vermeidung von Druckschwankungen ist es zweckmäßig, den oberen und unteren Gasraum 27, 27' über eine, hier nicht dargestellte, Druckausgleichsleitung zu verbinden. Die Räume 27, 27' sind durch Zwischenwände 41 jeweils in drei gleichartige Kammern unterteilt. Zum Zwecke des Druckausgleichs sind die Zwischenwände 41 mit Durchbrüchen 42, 42' ausgestattet. Diese Durchbrüche 42, 42' erlauben auch die getrennte Ableitung der Gase aus den Anolyt- und Katholyträumen durch Rohrleitungen 10, 11. Der durch die Leitung 2 eingetretene Anolyt wird über die Leitung 3 abgezogen und mittels Pumpe 17 gefördert und versprüht. Am Ende der Kaskade verläßt der Anolyt das Zellenpaket über die Leitung 3. Durch die Kaskadenführung wird die Konzentration und die Temperatur fortlaufend geändert, so daß unterschiedliche Anolytsorten entstehen. Der Katholyt wird analog zum Anolyten durch die Leitungen 4 und 5 ebenfalls kaskadenartig geführt. Die Räume 27 und 27' für die Tropfenstrecken 1, 1' sind durch Trennwände 20, 20' gasdicht abgetrennt. Die Öffnungen in den Leisten 18 und 18' sind für den Katholyten spiegelbildlich angeordnet.

## Ansprüche

1. Verfahren zur Ver- und Entsorgung von bipolar geschalteten Elektrolysezellen mit Electrolyt, wobei die einzelnen Elektrolysezellen eines Zellenpaketes untereinander und zu den elektrolytführenden Sammelleitungen mittels Tropfenstrecken galvanisch getrennt sind, dadurch gekennzeichnet, daß der Elektrolyt auf der Eingangsseite der Elektrolyträume der Zellen in Tropfen zerlegt wird, die über den Querschnitt des Zellenpaketes den einzelnen Elektrolyträumen direkt, zugeführt werden und daß der Elektrolyt auf der Ausgangsseite der Elektrolyträume über den Querschnitt des Zellenpaketes ein zweites Mal in Tropfen zerlegt wird, die abgeleitet werden.

## Claims

1. A process for supplying electrolytic cells in bipolar connection with electrolyte and discharging the latter from them, the individual electrolytic cells of a cell pile being electrically separated from one another and from the electrolyte-bearing mains by means of drop sections, which comprises dividing the electrolyte on the inlet side of the electrolyte spaces of the cells into drops, which are directly fed to the individual electrolyte spaces over the cross-section of the cell pile, and dividing the electrolyte on the outlet side of the electrolyte spaces over the cross-section of the cell pile a second time into drops, which are discharged.

## Revendications

1. Procédé pour alimenter des cellules d'électrolyse branchées en mode bipolaire, avec un électrolyte et évacuer ce dernier des cellules, les différentes cellules d'électrolyse d'un groupe de cellules étant séparées galvaniquement les unes sur les autres et par rapport aux canalisations de collecte amenant l'électrolyte, au moyen de sections de formation de gouttes, caractérisé en ce que, sur le côté entrée des espaces logeant l'électrolyte, des cellules, l'électrolyte est subdivisé en gouttes envoyées directement, dans la section transversale du groupe de cellules, aux différents espaces logeant l'électrolyte et que, sur le côté sortie des espaces logeant l'électrolyte, ce dernier est subdivisé une seconde fois, dans la section transversale du groupe de cellules, en gouttes qui sont évacuées.

FIG. 1
2
6
1
7
8
13
9
+
−
13
8
10
1'
38
3
FIG. 2
2
6
20
4
23
6'
1
26
24
7
9
27
28
22
21
10
11
25
1'
1'
38
38
20'
3
5
FIG. 3
2
20
4
6
6'
1
23
24
9
32
30
31
28
27
10
11
25
21
1'
33
38
38
20'
3
5

FIG. 4
FIG. 5
V
V
34
2
4
2
40
21
34
40
40
34
39
35
36
26
37
1
9
13
35'
26'
37'
1'
15
40
3
38
40
5
3
15
40
21
2
14
40
34
40
39
26
35
36
12
1
19
8
8
12
13
9
19
9
13
26'
35'
36
14
1'
15
40
3
38
40
21

FIG. 6
VII
4/2
6
4/2
6
6
18
26
16
41
+
−
41
18'
11
10
5/3
VII
5/3
17
17
FIG.7
20
2
6
4
41
42
1
27
18
23
24
26
9
21
25
18'
41
1'
42'
27'
3
38
5
20'